# EUROPEAN PATENT APPLICATION

(11) **EP 0 607 580 A1**
(43) Date of publication of application: **27.07.1994**
(21) Application number: 93120305.3
(22) Date of filing: 16.12.1993
(51) Int. Cl.: G06F 3/00, G06F 3/033

(54) **Tactile feedback mechanism for cursor control**

(30) Priority: 21.01.1993 US 6427
(71) Applicant: International Business Machines Corporation, Armonk, N.Y. 10504 (US)
(72) Inventor: Selker, Edwin Joseph, San Jose, California 94120 (US)
(74) Representative: Schäfer, Wolfgang, Dipl.-Ing.

(57) **Abstract**

The present invention integrates a feedback means with a cursor control device wherein the feedback signal to the operator of the cursor control device is independent of the means for generating cursor control information. An embodiment of the present invention integrates an indicating rod in a pointing stick cursor control device. The indicating rod extends through the length of the pointing stick and is attached to an actuator on one end below the base of the pointing stick. A transitory feedback signal generated from a computer system activates the actuator to apply a force to the indicating rod which presses against a fingertip of a pointing stick operator. The feedback signal is generated whenever the host signals for it, such as when the window handle status of the cursor displayed on a display screen changes. The feedback signal does not affect the operation or feel of the pointing stick in generating the cursor control information. A similar indicating rod is integrated in a mouse cursor control device by placing the indicating rod in the selection buttons on the mouse. The cursor control information is generated by the movement of the trackball and the indicating rod presses against fingertips resting on the selection buttons so that the means for sensing a feedback signal is separate from the cursor control signal generation. Similar feedback indicating means can be integrated in two or more cursor control devices used for controlling a single or multiple cursors on a display screen. Moreover, the feedback signal can be generated on any status information associated with a cursor, including but not limited to, the window handle of the cursor.

## Description

### Field of Invention:

This invention relates generally to the field of data processing systems. In particular, this invention relates to the control of a cursor as an input means for a data processing system. More specifically, this invention relates to a feedback apparatus for indicating to a cursor control user the position of a cursor on a display of a data processing system.

### Background of the Invention:

The power of computing has grown, and continues to grow, rapidly. This increased computing power has provided users of the computing power new opportunities to use computers in new ways. In particular, the computer has emerged from being a tool which is useful to a few people with specialized knowledge, into a tool which is accessible to the general public. This transformation in computer usefulness is largely due to devoting much of the increase in computing power to making the interaction between people and computers simpler. The simpler the interaction between people and the computer, the more people will be encouraged to make use of the computer's power and the more useful the computer will become. The interface between computer users and computers generally includes an input means such as a keyboard or mouse and an output means such as a visual display. One difficulty computer users encounter on typical interfaces is rapidly moving the cursor on the display while also being able to precisely locate the cursor at specific locations on the display. Computer users find it important to move the cursor rapidly across the, display for convenience and also require precise movement capability for graphical or object oriented applications. For example, several operating systems require a user to move the cursor across the display and select a window boundary line in order to move or change the size of the window. In this instance, the person does not want to watch a cursor slowly move across the screen but also requires the ability to select the small boundary line. Therefore, an interface which maximizes the ability to precisely and simply place the cursor on the display while at the same time quickly moving the cursor is very helpful to a general group of computer users.

The prior art has made several attempts at providing an interface which is simple for a user, rapidly moves the cursor, and precisely places the cursor. The general problem with the prior art interfaces is that the means which allows precise placement of the cursor also inhibits the rapid movement of the cursor. For example, one prior art device applies a brake mechanism to a mouse ball when the cursor is located in specific areas of the computer display. The brake mechanism is a feedback means from the computer to the computer user which indicates to the user that the cursor is within a specified area of the display. The physical perception of resistance to the ball motion supplements the optical perception of viewing the computer display and allows the user to more accurately position the cursor on the display. The problem with this prior art mechanism however, is that there are generally many areas on a computer screen which would provide resistance feedback to the computer user. This is a problem because such a feedback mechanism will inhibit the normal rapid movement of the cursor across the computer screen. The resistance to motion feedback is an integral part of the cursor movement device and so will continually interrupt the normal movement of the cursor. Therefore, the prior art interfaces are not satisfactory because free cursor movement is sacrificed to enhance the ability to precisely locate the cursor using a resistance feedback mechanism.

### Objects of the Invention:

It is an object of the present invention to manufacture an improved computer interface.

It is another object of the present invention to manufacture an improved computer interface which facilitates the rapid movement of a cursor on a computer display and precise placement of the cursor on the computer display.

It is a further object of the present invention to manufacture an improved computer interface which is simple to use.

It is still another object of the present invention to manufacture an improved computer interface which transmits nonoptical feedback to a computer user.

It is still a further object of the present invention to manufacture an improved computer interface wherein transmission of a feedback signal to a computer user does not impair the motion of the cursor on the computer display.

### Summary:

The objects of the present invention are accomplished by integrating a feedback means with a cursor control device wherein the feedback signal to the operator of the cursor control device is independent of the means for generating cursor control information. An embodiment of the present invention integrates an indicating rod in a pointing stick cursor control device. The indicating rod extends through the length of the pointing stick and is attached to an actuator on one end below or in the base of the pointing stick. A feedback signal generated from a computer system activates the actuator to apply a force to the indicating rod which presses against a fingertip of a pointing stick operator. The feedback signal is generated whenever an indicator of cursor status, such as the window handle status of a cursor displayed on a display screen, changes. The feedback signal does not affect the operation or feel of the pointing stick in generating the cursor control information. A similar indicating rod is integrated in a mouse cursor control device by placing the indicating rod in the selection buttons on the mouse or making the indicating rod thump against the mouse trackball. Specifically, the cursor control information is generated by the movement of the trackball and the indicating rod presses against fingertips resting on the selection buttons so that the means for sensing a feedback signal is separate from the cursor control signal generation. Similar feedback indicating means can be integrated in two or more cursor control devices used for controlling a single or multiple cursors on a display screen. Moreover, the feedback signal can be generated on any status information associated with a cursor, including but not limited to, the window handle of the cursor.

### Brief Description of the Drawing:

Figure 1 illustrates an embodiment according to the present invention.

Figure 2 illustrates a functional block diagram of an embodiment according to the present invention.

Figure 3 illustrates a block diagram of a process for generating a feedback signal according to the present invention.

Figure 4 illustrates a pointing stick according to the present invention.

Figure 5 illustrates a first mouse according to the present invention.

Figure 6 illustrates a process for selecting a cursor control device according to the present invention.

Figure 7 illustrates a more detailed functional block diagram of an embodiment according to the present invention.

Figure 8 illustrates a resistor bridge according to the present invention.

Figure 9 illustrates a process for generating cursor movement data according to the present invention.

Figure 10 illustrates a transfer function for generating cursor movement data according to the present invention.

Figure 11 illustrates an actuator circuit according to the present invention.

Figure 12 illustrates a second mouse according to the present invention.

### Description of the Preferred Embodiment:

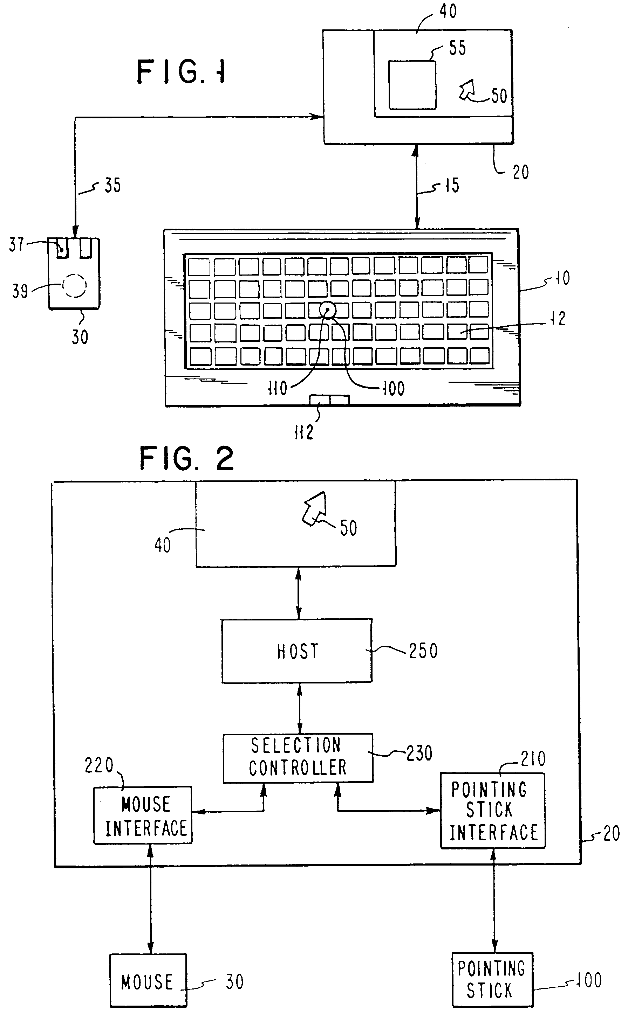

Figure 1 illustrates a preferred embodiment of the present invention. In particular, a computer system 20 having a display screen 40 for displaying a cursor 50 is connected to a keyboard 10 by interconnection 15. The computer system 20 is also connected to mouse 30 by interconnection 35. The keyboard 10 comprises a plurality of individual keys 12 and a pointing stick 100. The mouse 30 comprises at least one selection button 37 and a track ball 39. The pointing stick 100 includes a feedback indicator rod 110 and the mouse selection button also includes a feedback indicator rod 37. The cursor 50 moves within the area of the display screen 40 in response to signals sent to the computer system 20 from the keyboard 10 or in response to signals sent to the computer system 20 by the mouse 30. Pressing a key 12 or applying force to the pointing stick 100 generates the signals sent to the computer system 20. Similarly, rolling the track ball 39 or pressing the selector button 37 generates signals to be sent to the computer system 20. When the cursor 50 is moved across a boundary edge 55 of a designated area within the display screen 40, the computer system 20 generates a feedback signal which is sent to the feedback means which comprises the indicator rods. The feedback signal is sent to the feedback indicator rod 110 when the pointing stick 100 is controlling the movement of the cursor and the feedback signal is sent to the feedback indicator rod 37 when the mouse 30 is controlling the movement of the cursor. The feedback signal could also be sent to both indicator rods 37 and 110 or to only one indicator rod independent of the device which controls the cursor movement.

Figure 2 is a block diagram which illustrates the operation of a preferred embodiment of the present invention. Figure 2 illustrates that the computer system 20 comprises a host computer 250, selection controller 230, mouse interface 220, pointing stick interface 210, and display screen 40. Figure 2 also illustrates that the pointing stick 100 and the mouse 30 each generate digital signals which are sent to the pointing stick interface 210 and mouse interface 220 respectively. The pointing stick interface 210 and mouse interface 220 each send signals to the selection controller 230 which determines which signals to send to the host 250. The host 250 is a personal computer system, such as an "IBM PS/2" type computer system commercially available from International Business machines Corporation, or compatible type system. The host 250 moves the cursor 50 on the display screen 40 in response to signals sent from either the mouse 30 or pointing stick 100 as will be more fully explained below.

The host 250 maintains a status of the position of the cursor in the memory of the host at all times that the cursor is displayed. The status of the cursor 50 includes relevant parameters of the cursor such as X,Y cursor location, shape, color, and (most importantly for the purposes of the present invention) at least one window handle. A window handle is an indication that the cursor location is within a defined area denominated by the window handle. The present invention monitors feedback parameters, such as the window handle status of the cursor, in the host memory to generate a feedback signal when the window handle status changes.

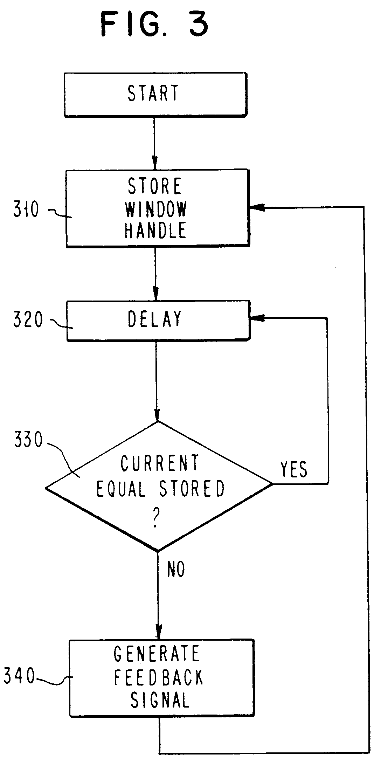

Figure 3 is a flow chart of a program which the host 250 runs concurrently with moving the cursor. Figure 3 illustrates that the window handle is initially stored 310, and then the cursor status is checked 330 after a delay 320 to determine if the current window handle is the same as the last stored window handle. When the current window handle is the same as the last stored window handle, then the program waits a delay period to check the status again. The delay period is approximately 25 mS but can be much smaller or larger depending on the speed of the cursor movement. when the current window handle is not the same as the last stored window handle, a feedback signal is generated 340 and the current window handle is stored. The boundary lines displayed on the display correspond to the locations at which the host will generate a window handle change when a cursor passes over the boundary line locations. Once the host has generated the feedback signal, the host 250 sends the feedback signal to either the pointing stick 100 or the mouse 30 through the selection controller 230 as illustrated in figure 2. The selection controller 230 chooses which cursor control device to send the feedback signal to based upon which cursor control device last had control of the cursor movement as will be explained below.

Other embodiments of the present invention include the host 250 generating a feedback signal based on feedback parameters other than the cursor window status that the host 250 monitors. For example, the host may generate a feedback signal when battery life in the computer is low, or when the host receives a message from another host, or when a printer is activated, or when an application program has completed processing, or when a time interval has finished, or when the cursor is moving at identified rates, or when the screen changes color, or when a disk drive is rotating, or when a keyboard entry is required, or when a speaker is off. These and other like parameters which are not related to the generation of cursor control signals and are monitored by the computer system may be the basis for feedback signals. The feedback signals are sent through the cursor control devices because the cursor control devices provide non-optical feedback to the user and a user's hands or fingers typically rest on these devices even when they are not controlling the cursor. In particular, when the pointing stick 100 is between the G and H keys of a IIQWERTY" keyboard (as shown in figure 1), the index finger of either the user's right or left hand may rest on the top of the pointing stick when not typing. Also, if the feedback means is integrated into the mouse 30, a user's fingers may rest on the feedback means in the mouse even though not moving the cursor with the mouse 30. In such situations, providing a feedback signal not related to the generation of cursor control signals is effective and convenient because feedback information is received by the user without interfering with the use of the cursor or other input means to the computer system.

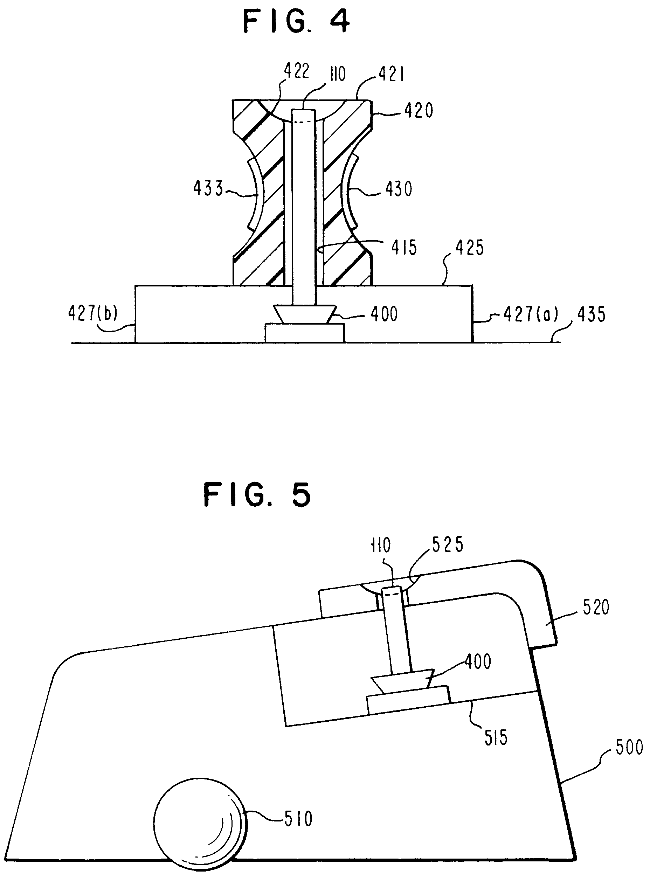

When the feedback signal is received by either the pointing stick 100 or the mouse 30, the feedback indicating rod associated with the cursor control device is pressed against the operator of the pointing stick 100 or mouse 30 to indicate to the user that a boundary of a window handle area has been crossed. Specifically, the feedback generating signal causes enough force to be temporarily placed on the indicating rod such that the skin of the operator (typically the fingertip) senses a bump force on the indicating rod. The feedback signal generates a transitory force on the indicating rod so that the operator feels a temporary bump when the cursor crosses the boundary line. Figure 4 illustrates the interrelation between the indicating rod 110 and the pointing stick 100. Figure 4 illustrates that an actuator 400 connected to an indicating rod 110 is attached to a keyboard base frame 435. The keyboard base frame 435 is connected to the keypad base 425 by supports 427(a) and 427(b). The keypad base supports the pointing stick 420 and also the other keys of a keyboard. The pointing stick 420 has an aperture 415 extending completely through the pointing stick 420 from the end of the pointing stick connected to the keypad base 425 to the opposing shaped end. The shaped end of the pointing stick has a recessed portion 422 which allows the finger to grip and apply force to the pointing stick 420. The indicating rod 110 is connected to the actuator 400 and extends through the aperture 415 in the pointing stick 420.

In the relaxed position (i.e. no actuator signal applied to the actuator), the indicating rod 110 extends beyond the recessed portion 422 of the pointing stick but not beyond the upper edge 421 of the pointing stick. The aperture 415 through the pointing stick 420 is large enough, and the pointing stick is stiff enough, so that horizontal force applied (horizontal to the plane of the keyboard base 435) on the pointing stick 420, which is measured by the strain gauges 430 and 433 attached to the sides of the pointing stick 420 as an input for cursor control, does not get applied to the indicating rod 110 through the pointing stick 420. Of course, other configurations of the indicating rod with respect to the pointing stick are contemplated by this invention. Specifically, having the indicating rod recessed below the recessed portion 422 or above upper edge 421 of the pointing stick 420.

When the actuator 400 is activated, the indicating rod is pushed up vertically (with respect to the plane of the keyboard base 435) . The vertical extension of the indicating rod 110 presses against a finger or the like of an operator which applies horizontal force to the pointing stick 420 to move a cursor on a display. The extension of the indicating rod is approximately up to the upper edge 421 of the pointing stick 420 but may go beyond the upper edge 421. As the cursor is moved across a boundary line on a display, an independent force (from the resistive force of the pointing stick itself) is sensed by the operator and the operator of the pointing stick can immediately stop applying force to precisely position the cursor on the boundary line. Moreover, the user can cross a boundary line with a cursor and sense the boundary crossing though the indicating rod 110 without the movement of the cursor being affected. The interrelation of the operation of the' indicating rod and the pointing stick provide a unique capability to simply, precisely, and rapidly control a cursor.

The interrelation between the pointing stick operation and the indicating rod operation can also be extended to the mouse cursor control device. Figure 5 illustrates a cross section of a mouse type cursor control device which incorporates the interrelation between the indicating rod 110 and the cursor control device. The mouse comprises a trackball 510 which rolls on a surface as the mouse frame 500 is slid across the surface. The rotation of the trackball provides a signal to the computer system which controls the cursor position on a display screen. An actuator 400 is attached to a support frame 515 which is in turn attached to the mouse frame 500. The actuator 400 is attached to an indicating rod 110 which extends from the actuator through the mouse frame 500 and through a mouse button 520. The mouse button 520 has recessed portions 525 which surrounds the indicating rod 110. As in the embodiment of the indicating rod in the pointing stick described above, when the cursor crosses a boundary line on the display screen, the actuator pushes the indicating rod against an operator's finger or the like which rest on the mouse selection key. The resulting bump force of the actuator is separate from the rotation motion of the trackball, as the mouse is slid on a surface, but integral to the cursor control device such that the two interrelated signals, cursor control and feedback, are easily controlled with a single device.

The integration of the indicating rod into a cursor control device as explained above for both the mouse or the pointing stick can also be extended into multiple cursor control devices having multiple indicating rods. Specifically, when two or more cursor control devices control a single cursor, as explained below, each of the control devices can be integrated with an indicating rod as explained above. Moreover, each indicating rod may respond to feedback signals generated from different feedback parameters. For example, a first indicating rod integrated into a pointing stick may provide feedback based on window handle status and a second indicating rod integrated into a mouse may provide feedback based on time delay between cursor movement. The feedback signals generated in different cursor control devices need not be based on the same feedback parameters so as to provide different information to the user through the multiple cursor control devices without interfering with cursor control.

Figure 2 is a block diagram of an embodiment of the present invention. Information transmitted to the host 250 through the selection controller 230 is compatible with an input port interface. The explanation of the standard pointing device input port interface used in this embodiment between the selection controller 230 and the host 250 is provided in the reference: IBM Mouse Technical Reference, IBM Publication No. 68X2229, S68X-2229-00, First Edition, April 1987, which is here by incorporated by reference. In particular, the interface requires that cursor control information passed between the selection controller 230 and the host 250 by transmitted according to a stated protocol in three byte (8 bits per byte) messages of data. The computer system 250 changes the position of the display cursor 50 on the display screen corresponding to the three input bytes of data regardless of how the bytes of data are generated. As a result, when the data transmitted by the selection controller 230 is compatible with the input port interface, the display cursor position on the screen 40 will reflect the three bytes of data without any modification of the computer system 250.

Figure 2 illustrates that a mouse cursor control device 30 and a pointing stick 100 transmit cursor control information to the selection controller 230 through the mouse interface 220 and the pointing stick interface 210 respectively. The mouse interface 220 and the pointing stick interface 210 establish communications between the selection controller and the cursor control devices so that the cursor control information can be passed to the selection controller 230. In particular, the mouse interface 220 initially interrogates the mouse 30 in the remote mode (as discussed in the IBM Mouse Technical Reference referred to above) to initiate communication between the mouse 30 and the mouse interface 220. The mouse interface 220 then measure the time delay between the interrogation and the reply from the mouse 30. The mouse interface 220 then generates a rate at which the mouse interface 220 can subsequently interrogate the mouse 30 in the remote mode and receive cursor control information from the mouse. This rate is approximately 60 times per second but largely depends on the specific mouse driver used. For example, the rate could be as low as 10 or as high as 250 times per second. The cursor control information received by the mouse interface 220 from the mouse 30 is in the form of three bytes of data. The first and second bytes of data represent the magnitude of the X and Y mouse movement with respect to the currently displayed mouse position. The third byte of data contains the sign of the X and Y movement data associated with the first and second bytes of data (2 bits), overflow information for the X and Y movement data (2 bits) , 3 status bits, and a reserved bit. These three bytes of data are passed through the mouse interface 220 to the selection controller 230 when the mouse 30 replies to interrogation by the mouse interface 220 with movement control data. The pointing stick interface 210 also supplies these same three bytes of data, which represent the same cursor movement information, to the selection controller 230 on a periodic basis.

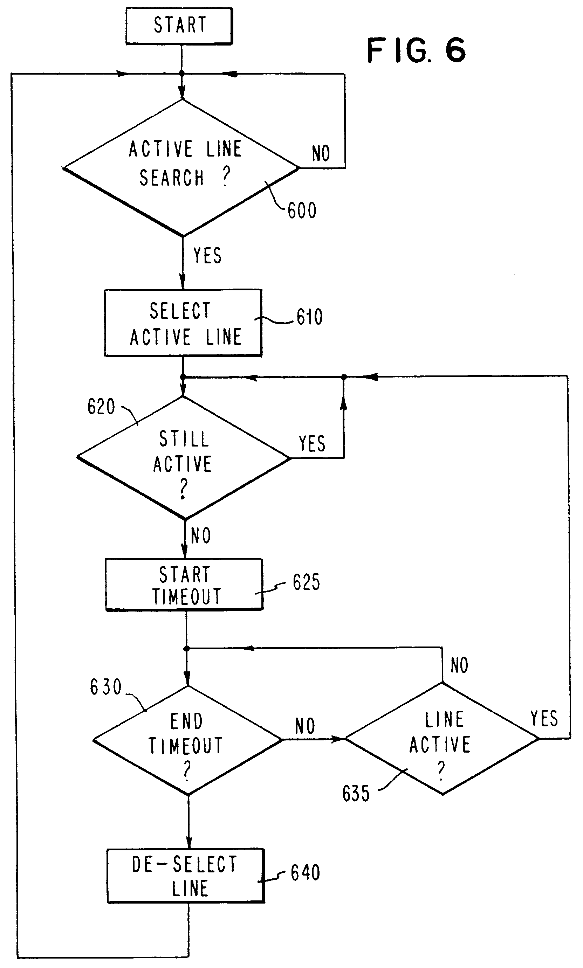

The selection controller 230 of figure 2 is connected to at least two cursor control devices. Figure 6 illustrates the process by which the selection controller 230 selects a control device. The selection controller maintains an activity bit in its memory corresponding to each cursor control device connected to the selection controller. When a cursor control device transmits a three byte message having movement data which is not equal to zero or data indicating that one of the switches is closed (i.e. status bit), the selection controller 230 sets the corresponding activity bit (i.e. activity bit = 1) . The activity bit is reset (i.e. activity bit = 0) when the cursor control device transmits a three byte message having movement data equal to zero or data indicating no switch closure. The activity bit is set or reset approximately 60 times per second corresponding to the number of times the cursor control device interface interrogates the cursor control device for cursor control information. The active line search decision 600 of figure 6 illustrates the controller 230 continuously monitors the activity bit associated with each cursor control device until an activity bit is set. when an activity bit corresponding to one cursor control device is set, that cursor control device is selected 610 and the selection controller ceases to monitor the remaining cursor control devices and passes the movement and switch data onto the host system 250 according to the protocol of the associated interface. The selection of the first cursor control device to become active is, in effect, a priority based selection with the parameter of time to send data being the basis of the priority. Other priority schemes, such as assigning priority, could be used as a basis of selecting a cursor control device.

Once the movement data has been passed from the selection controller to the host, the cursor control interface interrogates the cursor control device again and transmits cursor movement information to the selection controller. The selection controller 230 then sets or resets the activity bit again and monitors 620 the setting of the activity bit. When the activity bit is reset (i.e. no new movement or switch closure) , the selection controller starts a delay interval Td through the start timeout operation 625. The active, but still selected cursor control device, is monitored 630 until either the delay interval Td expires or the selected cursor control device becomes active again 635. When the selected line becomes active again before Td expires the controller returns to the decision 620 for monitoring the activity of the cursor control device. When Td expires before the selected cursor control device becomes active again the selected cursor control device is deselected 640 and the selection controller 230 returns to monitoring 600 the activity bits of associated cursor control devices. The delay interval Td may be in the range of 0.01 to 10 seconds or more with a preferred value of approximately 0.3 seconds. when a cursor on a display screen crosses a window boundary a cursor control device for moving the cursor will have been selected. The feedback signal which is generated by the host is sent to the selection controller 230 which in turn sends the feedback signal to the selected cursor control device.

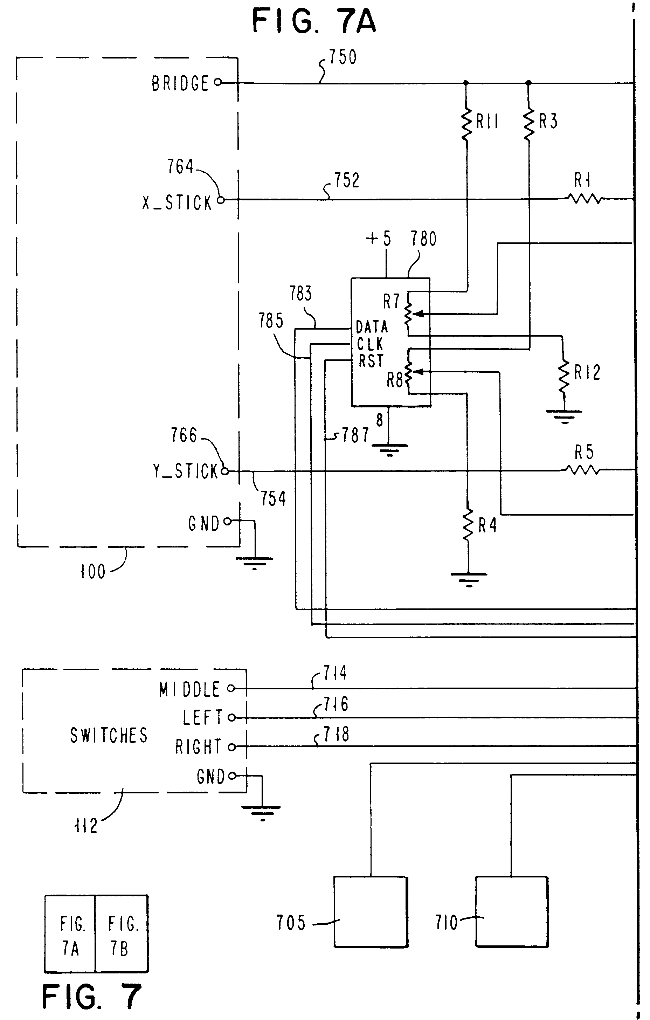

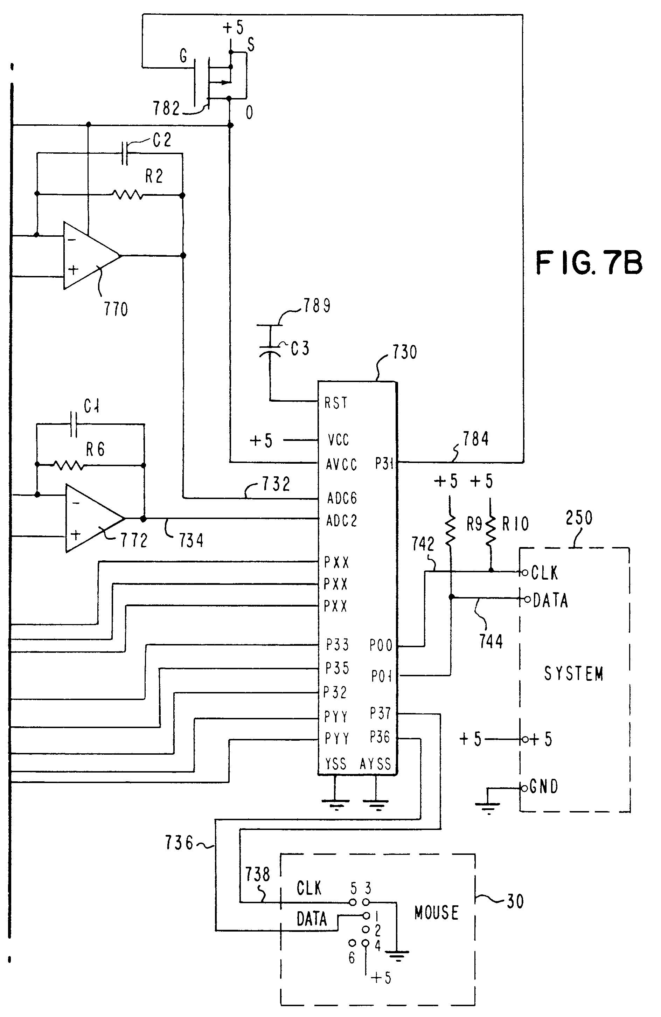

Figure 7 is a more detailed illustration of the embodiment of the present invention shown in figure 2. A first cursor control device consists of a pointing stick 100 and switch apparatus 112. A second cursor control device is a mouse 30. The selection controller 230 is contained in an 8 bit CMOS microcontroller 730, commercially available from Signetics Corporation under the part number S87C752-4A28, which also contains the functional equivalents of the mouse interface 220 and the pointing stick interface 210. The selection controller is integrated with the mouse and pointing stick interfaces in the microcontroller 730 of this embodiment merely due to the convenience of having several functions integrated in one particular microcontroller integrated circuit. Implementing the mouse and pointing stick interface functions separately from the selection controller is contemplated by the present invention. The mouse 30 and switch apparatus 112 transmit digital information to the microcontroller 730. The microcontroller 730 is programmed by conventional techniques to implement the selection controller decision process illustrated in figure 6, as well as the pointing stick and mouse interfaces.

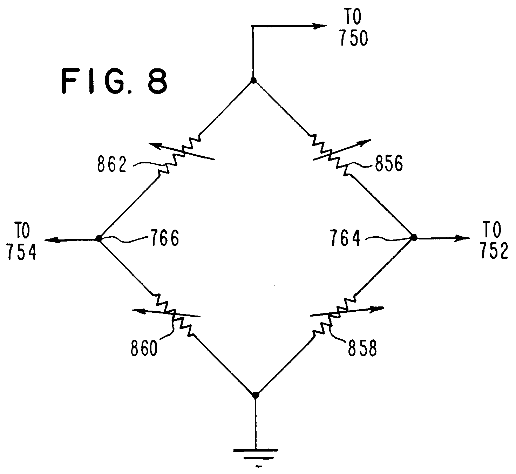

The pointing stick 100 does not generate digital data which is useful to the selection controller 730. The pointing stick is an electromechanical sensing device which can be electrically represented as a resistor bridge which is illustrated in figure 8. The electromechanical sensing device is implemented as an interconnected group of variable resistors or strain gauges (430 and 433 of figure 4) bonded to the shaft of the pointing stick 100. The resistors or strain gauges are interconnected such that as horizontal force is applied to the pointing stick by an operator in a direction away from the operator, the resistor 862 is decreased while resistor 860 is increased. When current is flowing through the resistor bridge shown in figure 8 due to a voltage applied to node 750 of figure 7 while force is applied to the pointing stick, the voltage at node 766 of figure 7 is increased with respect to the voltage at node 766 when no force is applied. A similar voltage change occurs at node 764 when the pointing stick is moved to the right of the operator. Also, the voltages on nodes 766 and 764 decrease when the pointing stick is moved toward or to the left of the operator respectively.

The voltage changes on nodes 766 and 764 with respect to the zero force voltages are very small, on the order of several millivolts. In order to be useful, the voltages on nodes 766 and 764 must be amplified. Op amps 772 and 770 of figure 7 are connected to nodes 766 and 764 through interconnections 754 and 752 respectively. The amplified output voltages of op amps 770 and 772 appears at nodes 732 and 734. The gain of the op amp 772 is set by the values of R5, R6, and C1. Similarly, the gain of op amp 77- is set by R1, R2, and C2. the typical gain of the amplifiers is approximately 700, but can range from 1 to 5,000. The output of the op amps on lines 732 and 734 have a voltage range of approximately +/- 1 volt which is compatible with the analog input requirements of the Signetics microcontroller 730. The op amps operate in differential mode in which the output voltage depends on the voltage difference between the input terminals. The positive input terminal for each op amp is connected to a reference voltage which is set by resistors R7 and R8. Resistors R7 and R8 are digitally controlled variable resistors and are contained in a single integrated circuit 780 manufactured by Dallas Semiconductor, part number DS1267S-10. The resistors are controlled by data line 783, clock line 785, and reset line 787 from microcontroller 730. The values of the resistors R7 and R8 are set by the microcontroller 730 each time a voltage signal is applied to the reset line 789 which occurs, inter alia, at the power on time. The microcontroller 730 is programmed to adjust the value of the resistors to bring the output voltages of node 732 and 734 close to one half of the output voltage AVCC on line 750. In particular, when AVCC is 5 volts, then the voltages on nodes 732 and 734 are adjusted to approximately 2.5 volts.

The microcontroller 730 also performs the function of controlling the power to the resistor bridge through MOSFET switch 782. The gate of switch 782 is controlled by the microcontroller 730 through line 784. The microcontroller 730 turns on the switch 782 before measurement information is to be sent from the pointing stick 100 to the microcontroller 730 and turns off the switch 782 when no information is requested from the pointing stick 100. When switch 782 is turned off, the pointing stick 100, op amps, and analog to digital (A/D) converters in the microcontroller are not powered. The digitally controlled resistors remain powered so as not to lose the initial setting. This power control device to the analog signal generating devices is very useful in low power type devices because it considerably decreases the power requirements of devices which consume large amounts of power compared to purely digital elements. Typically, the switch 782 is turned on and off approximately 200 times per second (which can vary depending on the speed of the microcontroller among other items) and this reduces the power requirements to the pointing stick.

Once analog voltages of an appropriate level have been generated at node 732 and 734, the analog voltages representing force on the pointing stick 100 must be converted into a digital representation of force. This is accomplished by A/D converters contained in the microcontroller 730. The A/D converters contained in the microcontroller are used for convenience but could be separate from the microcontroller. The microcontroller 730 contains one input pin for each input line 732 and 734 respectively. The microcontroller 730 converts the analog voltages of each input pin into an 8 bit digital representation. The microcontroller 730 (functioning as the A/D converter) samples the analog signals on lines 732 and 734 at a rate of approximately 200 times per second during the times in which the microcontroller 730 supplies power to the pointing stick. The sampling rate can vary greatly but generally lies in the range of 25-400 times per second. Each time the A/D converter function samples the voltages on line 732 and 734, two 8 bit numbers representing the magnitudes of the voltages on nodes 732 and 734 (which in turn represent cursor movement) are generated and become available to the microcontroller 730.

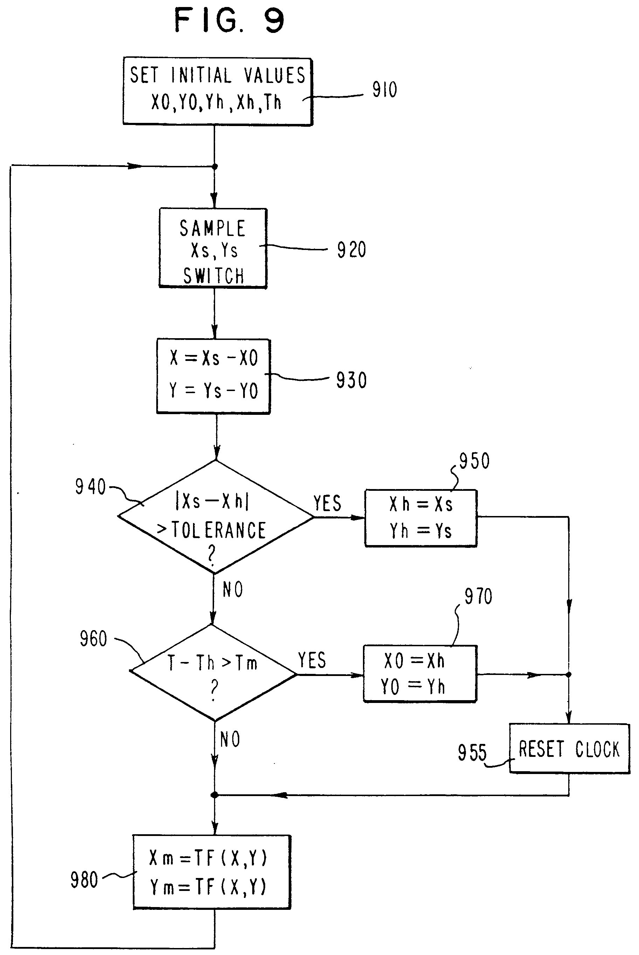

Figure 9 illustrates the process by which the microcontroller 730 converts the A/D output into data suitable for transmission to a computer system through the selection controller 230. In particular, figure 9 illustrates that the microcontroller 730 sets 910 the initial zero forces values XO, YO for the pointing stick, sets the stable forces values Xh, Yh for the pointing stick, and reads an initial clock value Th. Once the initial setting of parameters has been made, the two output values from the A/D converters are sampled 920 and labeled Xs, Ys. The differences between the sampled values and the zero force settings are then computed 930. At this point, a decision must be made as to whether the difference between the sampled and initial force values is due to actual force on the pointing stick or changes in the output of the A/D converter which occur as a result of tolerances associated with the electronics implementing the pointing stick interface. Such tolerances could be environmental or manufacturing related. when the difference 940 between the sampled values Xs, Ys and the stable values Xh, Yh is greater than a tolerance value, then the microcontroller assumes that the actual applied force has changed and sets the new stable value equal to the sampled value 450 and resets the clock value Th 955. The tolerance value in this implementation is designated to be the binary digit I'll, in the next to least significant bit in the difference between Xs,Ys and Xh,Yh. The tolerance value can be larger or smaller. When the difference between the sampled value and the stable value is less than or equal to the tolerance, the microcontroller assumes that the difference between Xh,Yh and XO,YO is due to tolerance variation and then must determine whether to change the zero force values XO,YO. XO,YO are set to the current values of Xh,Yh 970 and the clock is reset 955 when the current time is greater than Tm from Th 960. That is, the stable values have not been reset for at least Tm seconds where Tm is approximately 2.8 seconds and could range from fractions of a second to minutes. The value Tm is preferably in the range of 2 to 4 seconds. This preferred range of Tm provides optimum interaction between the operator of the pointing stick and the computer system. when the current time minus Th is not greater than Tm, then the current and stable values are maintained.

After the microcontroller 730 determines whether the stable and zero values should be updated, the output cursor movement values Xm,Ym are generated 980 and sent to the selection controller 230 with the switch setting data. The values Xm and Ym are outputs of a transfer function which takes the difference values generated in step 930 as inputs. In particular, the difference values are treated as components of a force vector. The magnitude of the force vector is determined from the difference values, and this magnitude is then converted by the transfer function into a cursor velocity vector. The cursor velocity vector has a magnitude determined by the transfer function and a direction equal to the direction of the force vector. The cursor velocity vector is then decomposed into its Xm and Ym components which are, in turn, sent to the selection controller 230.

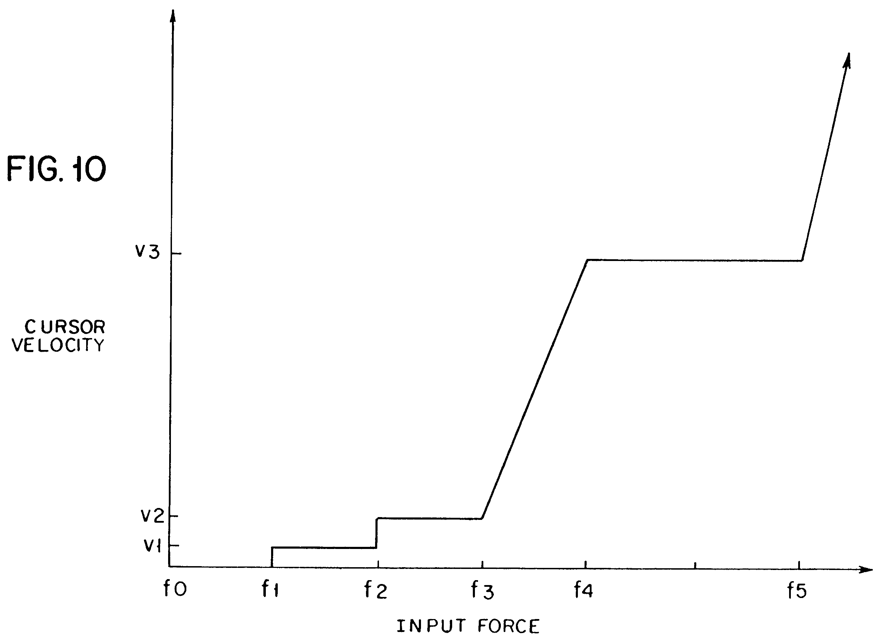

The specific transfer function implemented in this embodiment of the present invention is illustrated in figure 10. Specifically, figure 10 plots input force against cursor velocity. The input force is represented by the X,Y input data (from step 930 of figure 9) to the transfer function. The cursor velocity is the amount of relative movement of the cursor in the time interval between the current time and the last time that cursor movement data was transmitted to the computer system. Figure 10 illustrates that there are five regions in the transfer function depending on the force applied to the pointing stick. The first region between fO and f1 is a dead band region in which zero velocity is output for a small amount of force. The region between f1 and f2 provides a low, but greater than zero, velocity v1 for the input force. the regions between f2 and f3 also provides a low, but higher than v1, velocity v2 for the region on input force. The two step (v1 and v2) feature of the transfer function increases the ability of the user to locate the cursor at particular positions on a display screen, for example on display icons. The region between f3 and f4 is a ramp up to a plateau velocity v3. The plateau velocity is a velocity which approximately agrees with the eye-tracking limit. That is, the speed at which the human eye can accurately follow a cursor across a display screen. The plateau velocity is constant for a large range of force so that a user can easily move the cursor across a display screen as fast as the eye can track the cursor without applying too much force so as to lose the cursor. The region between f4 and f5 is the plateau level. The region beyond f5 is a steep rise in the velocity / force relation. This region allows users of the pointing stick to make a cursor dash across a screen almost instantaneously. The value of the plateau velocity is approximately 60 cm/sec for a force of between approximately 160 and 190 grams. The different regions in the transfer function allow for ease of coordination between the user of the pointing stick and the computer system response to user input. Another embodiment of the present invention incorporates the form of the transfer function as described in the pending United States patent application S/N 07/917,091, entitled "Controller for Improved computer Pointing Devices", filed November 29, 1990, which is assigned to the same assignee as the present application, and which is hereby incorporated by reference.

The generation of output values (step 980 in figure 9) in the embodiment of the present invention as illustrated in figure 7 is accomplished through conventional programming means in the microcontroller 730. The program means not only generates Xm and Ym cursor movement values according to the transfer function but also places these values, along with switch data transferred from the switches through lines 714, 716, and 718 of figure 7, into the three byte format compatible with the pointing device port interface. The microcontroller 730 is also programmed to function as a selection controller 230 and transmit cursor movement data to the host 250 over clock and data lines 742 and 744 respectively. The cursor movement data from the mouse 30 is sent to the microcontroller 730 through clock and data signal lines 738 and 736 respectively. The host 250 also sends signals representing commands to the microcontroller 730 through clock and data lines 742 and 744 respectively. One of the commands which the host 250 sends to the microcontroller 730 is the command to generate feedback signals in one of the cursor control devices. The microcontroller 730 receives the command and sends an actuator pulse to the actuator circuit 705 if the selection controller 230 indicates (through the activity bit) that the pointing stick 100 is currently selected, or sends the actuator pulse to the actuator circuit 710 if the mouse 30 is currently selected. The actuator pulse is a pulse of approximately 5 volts for approximately 20 mS. The magnitude and duration of the actuator pulse will depend on the actuator circuit used.

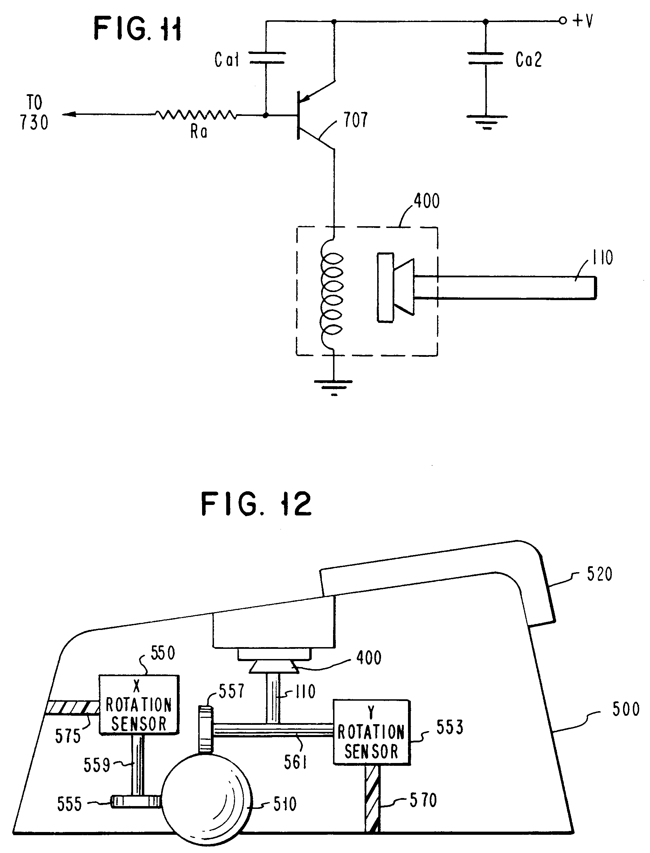

An actuator circuit for an embodiment of the present invention is illustrated in figure 11. There is at least one actuator circuit for each cursor control device. The actuator circuit has a supply voltage (+V) of approximately 5 volts (+/- 10%) connected to the emitter of a PNP transistor 707. The collector of the transistor 707 is connected to the actuator element 400 which electrically behaves like an inductor. The base of the transistor 707 is connected to the microcontroller 730 through resistor Ra which has a value of approximately 820 ohms. Capacitor Cal has a value of approximately 10 microfarads and connects the base to the emitter, and capacitor Ca2 has a value of approximately 47 microfarads and connects the emitter to ground. The actuator pulse sent to the actuator circuit creates a temporary current in the collector of the transistor 707 and the magnetic field generated from the inductor of the actuator causes a force on the indicating rod attached to the actuator. The force on the indicating rod from the actuator provides the feedback to the operator of the cursor control device.

Another embodiment of the present invention provides an actuator pulse to the actuator circuit through the host 250 rather than generating the actuator pulse in the selection controller. In particular, the selection controller 230 communicates to the host 250 which cursor control device is active. When a cursor crosses a window boundary line and the window handle changes, or any other parameter monitored by the host associated with a particular feedback means changes, the host system generates an actuator pulse having a duration of approximately 20 mS and sends the pulse to the actuator circuit corresponding to the cursor control device through an output port of the host 250 system such as the RS-232 port on the IBM compatible host 250. The RS-232 port has a 12 volt output signal. In this case the characteristics of the capacitors, resistors, and transistor devices may have to be adjusted as is well known in the art.

Still a further embodiment of the present invention is illustrated in figure 12. Figure 12 illustrates a cross section of a mouse 500 having selection switches 520 and trackball 510. The rotation of the trackball is sensed by conventional X rotation sensor 550 and Y rotation sensor 553. The rotation sensors are coupled to the trackball by motion pick-up wheels 555 and 557 through drive shafts 559 and 561 respectively. When an actuator signal is sent to the actuator 400, the indicating rod 110 is pressed against the drive shaft 561 (or in still alternate embodiments, drive shaft 559). The Y rotation sensor 553 is pivotally mounted on the mouse frame 500 of the mouse by conventional mount ing means 570 such that the force from the indicating rod 110 is transferred to the trackball 510. Additionally, X rotation sensor is pivotally mounted to the mouse frame 500 by conventional mounting means 575. The user moving the mouse, and hence rotating the trackball 510, then feels a bump in the rotation of the trackball 510. The bump felt by the user does not interfere with the rotation of the ball because the force on the rotation of the drive shaft is not large enough to interfere with the drive shaft rotation. However, the user does feel the bump from the indicating rod and receives the feedback signal. Another actuator may be placed on the drive shaft 559 in addition to the actuator on drive shaft 561 to differentiate between different feedback signals. The feedback signal remains independent of the cursor control because the drive shaft rotation is not impeded but the feedback signal is integrated into the cursor control device.

While the invention has been described and illustrated with respect to plural embodiments thereof, it will be understood by those skilled in the art that various changes in the detail may be made therein without departing from the spirit, scope, and teaching of the invention. Therefore, the invention disclosed herein is to be limited only as specified in the following claims.

## Claims

1. A cursor control device for controlling a cursor on a display, comprising:
a control means for generating cursor control signals and transmitting said cursor control signals to said display, and
a feedback means being integral to said control means for indicating to an operator of said cursor control device a parameter status.

2. A cursor control device for controlling a cursor on a display, comprising:
a control means for generating cursor control signals and transmitting said cursor control signals to said display, said control means comprising a pointing stick; and
a feedback means comprising an indicating rod contained in said pointing stick for indicating to an operator of said cursor control device a parameter status.

3. A cursor control device for controlling a cursor on a display, as in claim 1 or 2 wherein:
said feedback means further comprises an actuator, said actuator applying force to said indicating rod without affecting said pointing stick generation of cursor control signals.

4. A cursor control system for controlling a cursor on a display, comprising:
a control means for generating cursor control signals and transmitting said cursor control signals to said display, said control means comprising at least two cursor control devices, and;
a feedback means being integral to each of said cursor control devices for indicating to an operator of said cursor control system a status of a plurality of parameters.

5. A computer system, comprising:
a display means for displaying a cursor;
a host computer coupled to said display means; and
a cursor control means for generating cursor control signals coupled to said host computer, said host computer receiving said cursor control signals, generating cursor display signals and sending said cursor display signals to said display means, said cursor control means comprising a feedback means integral to said cursor control means for indicating to an operator of said cursor control means a parameter status.

6. A computer system, comprising:
a display means for displaying a cursor;
a host computer coupled to said display means; and
a cursor control means for generating cursor control signals coupled to said host computer, said host computer receiving said cursor control signals, generating cursor display signals and sending said cursor display signals to said display means, said cursor control means comprising a pointing stick and a feedback means integral to said pointing stick for indicating to an operator of said cursor control means a parameter status.

7. A computer system, as in claim 6, wherein:
said feedback means comprises an indicating rod and an actuator, said indicating rod contained within said pointing stick for indicating to an operator of said cursor control means a parameter status, and said actuator applying force to said indicating rod without affecting said pointing stick generation of cursor control signals.

8. A computer system, comprising:
a display means for displaying a cursor;
a host computer coupled to said display means; and
a cursor control system for generating cursor control signals coupled to said host computer, said host computer receiving said cursor control signals, generating cursor display signals and sending said cursor display signals to said display means, said cursor control system comprising a plurality of cursor control devices and a feedback means integral to each of said cursor control devices for indicating to an operator of said cursor control system a status of a plurality of parameters.

9. A computer system, as in claim 8, wherein:
at least one of said plurality of cursor control devices is a pointing stick; and
said feedback means comprises an indicating rod integral to each of said cursor control devices, said indicating rod integral to said pointing stick being contained within said pointing stick.

10. A computer system, as claimed in any one of the preceding claims, wherein:
said feedback means further comprises an actuator integral to each of said cursor control devices, said actuator integral to said pointing stick applying force to said indicating rod contained within said pointing stick without affecting said pointing stick generation of cursor control signals.

11. A computer system, as claimed in any one of the preceding claims, wherein:
said parameter status indicates cursor position on said display.

12. A computer system, as claimed in any one of the preceding claims, wherein:
said parameter status indicates a change in window handle status of said cursor.
